# FASCICULE DE BREVET EUROPEEN

(11) **EP 1 883 736 B1**
(45) Date de publication et mention de la délivrance du brevet: **12.08.2009**
(21) Numéro de dépôt: 06743760.8
(22) Date de dépôt: 04.05.2006
(51) Int. Cl.: E02F 3/36, F16L 37/34

(54) **DISPOSITIF DESTINÉ À RÉALISER L'ALIMENTATION EN HUILE D'UN OUTIL MONTÉ SUR UN ENGIN PORTEUR ET ENSEMBLE DE CONNEXION HYDRAULIQUE**
VORRICHTUNG ZUR ZUFÜHRUNG VON ÖL ZU EINEM AUF EINER TRÄGERVORRICHTUNG ANGEBRACHTEN WERKZEUG UND HYDRAULISCHE VERBINDUNGSANORDNUNG
DEVICE FOR SUPPLYING OIL TO A TOOL MOUNTED ON A SUPPORT DEVICE AND HYDRAULIC CONNECTION ASSEMBLY

(30) Priorité: 25.05.2005 FR 0505256
(43) Date de publication de la demande: 06.02.2008
(73) Titulaire: Ateliers de Constructions du Beaujolais, 69220 Belleville (FR)
(72) Inventeur: JANDARD, Philippe, F-01600 Saint Didier de Formans (FR); SIEFFERT, René, F-69460 Odenas (FR); COUDERT, Remi, F-69400 Villefranche s/Soane (FR)
(74) Mandataire: Delorme, Nicolas
(86) Numéro de dépôt international: PCT/FR2006/001003
(87) Numéro de publication internationale: WO 2006/125877

(56) Documents cités:
- EP-A- 1 260 752
- EP-A- 1 473 415
- DE-A1- 19 706 998
- FR-A- 2 593 101
- FR-A- 2 830 881
- US-A- 5 316 347
- US-A1- 2004 124 634
- US-B1- 6 230 740
- PATENT ABSTRACTS OF JAPAN vol. 007, no. 207 (M-242), 13 septembre 1983 (1983-09-13) -& JP 58 102804 A (NIHON NIYUUMACHITSUKU KOGYO KK), 18 juin 1983 (1983-06-18)

## Description

La présente invention concerne un dispositif destiné à réaliser l'alimentation en huile d'un outil monté sur un engin porteur, ainsi qu'un ensemble de connexion hydraulique comprenant au moins un tel dispositif et un module de connexion destiné à être monté sur l'outil.

Le dispositif est en particulier destiné aux engins munis de systèmes d'attache rapide pour lesquels il est souhaitable de réaliser simultanément une connexion hydraulique de façon rapide et efficace.

On connaît déjà des dispositifs permettant l'alimentation en huile d'un outil, tel qu'un godet, placé sur le bras d'un engin tel qu'une pelle.

Le document EP 1 473 415, par exemple, décrit un tel dispositif comprenant un corps dans lequel sont ménagés des alésages recevant chacun un piston dont l'extrémité est munie d'un connecteur hydraulique. Ce dispositif est fixé sur un support lui-même lié à l'attache rapide de l'engin.

Pour la connexion hydraulique de l'outil à l'engin, il est nécessaire de déplacer les pistons vers l'outil pour que les connecteurs hydrauliques du dispositif puissent coopérer avec les connecteurs hydrauliques prévus sur l'outil.

Ce déplacement impose que les lignes de pression de l'engin alimentant le dispositif soient réalisées avec des tuyaux flexibles. Cela présente des inconvénients majeurs en termes d'encombrement, de coût, mais aussi de fragilité. La rupture des flexibles, dont les déplacements sont rapides et fréquents, est un risque réel, et ses conséquences peuvent être graves tant pour le matériel que pour le personnel.

Par ailleurs, il est généralement prévu, pour la nécessaire décompression des lignes de pression de l'engin, des kits séparés à monter en amont du dispositif, ce qui augmente encore l'encombrement et le coût de l'ensemble.

Le document FR 2 593 101 décrit un dispositif de raccordement automatique d'une installation hydraulique mobile à une source de fluide sous pression. Ce dispositif comprend un corps dont l'alésage longitudinal reçoit d'une part une bride et d'autre part un piston tubulaire pourvu d'un canal longitudinal. Le piston peut coulisser dans l'alésage selon la pression régnant dans les chambres annulaires amont et aval prévues de part et d'autre de l'épaulement extérieur dudit piston.

Le fluide est amené par une conduite traversant le volume formé à l'intérieur de la bride et du piston. Cette conduite est connectée à un raccord fixé à l'extrémité du piston qui doit être reliée à l'installation hydraulique mobile. Puisque le piston est un élément mobile, la conduite doit nécessairement être flexible, et l'on retrouve les inconvénients correspondants précités.

De plus, il est à noter que, dans la structure proposée par le document FR 2 593 101, le volume formé à l'intérieur de la bride et du piston est vide de fluide hydraulique.

La présente invention vise à remédier aux inconvénients mentionnés ci-dessus, en fournissant un dispositif de connexion hydraulique de structure simple qui soit d'un encombrement réduit et ne nécessite pas l'emploi de tuyaux flexibles.

A cet effet, et selon un premier aspect, l'invention concerne un dispositif destiné à réaliser l'alimentation en huile d'un outil monté sur un engin porteur, notamment sur un bras de celui-ci, ledit dispositif étant destiné à être monté sur ledit engin et comprenant :
- un corps dans lequel est ménagé au moins un alésage longitudinal ;
- un piston tubulaire engagé dans ledit alésage, présentant au moins un premier canal longitudinal traversant et un épaulement tourné vers l'extérieur, disposé en partie amont et coopérant avec la face intérieure de l'alésage ;
- une chambre aval annulaire, définie entre l'aval de l'épaulement du piston tubulaire et l'alésage, et destinée à être reliée à un bloc de commande hydraulique ;
- un premier connecteur hydraulique placé dans le premier canal du piston tubulaire, en partie aval, et destiné à coopérer avec un premier connecteur hydraulique monté sur ledit outil ;
- un organe comprenant au moins une première tige tubulaire de diamètre extérieur correspondant au diamètre du premier canal du piston tubulaire, ladite tige étant au moins partiellement engagée dans ledit premier canal à partir de l'amont et délimitant avec le corps et en amont de l'épaulement du piston tubulaire une chambre annulaire amont, destinée à être reliée à un bloc de commande hydraulique, la première tige tubulaire comprenant un premier orifice longitudinal traversant destiné à permettre le passage d'huile vers le premier canal du piston tubulaire et l'alimentation de l'outil en huile.

Le piston tubulaire est apte à coulisser longitudinalement dans l'alésage en fonction des pressions imposées dans les chambres aval et amont par le bloc de commande hydraulique, entre :
- une position déployée dans laquelle le premier connecteur hydraulique du piston tubulaire est apte à coopérer avec le premier connecteur hydraulique de l'outil pour mettre en communication la première ligne hydraulique de l'engin et une première ligne hydraulique de l'outil ;
- et une position rétractée, dans laquelle le premier connecteur hydraulique du piston tubulaire peut être déconnecté du premier connecteur hydraulique de l'outil.

Selon l'invention, le premier orifice de l'organe est agencé pour pouvoir être relié en amont à une première ligne hydraulique de l'engin et ledit premier orifice définit avec le premier canal du piston une première chambre intérieure apte à être alimentée en huile par la première ligne hydraulique et à former un premier conduit de circulation d'huile vers l'outil.

Puisque le piston tubulaire se déplace, et que l'huile circule directement dans la chambre intérieure formée dans l'organe et le piston et non dans une conduite traversant cette chambre intérieure, il n'est pas nécessaire que l'ensemble du dispositif de connexion monté sur l'engin se déplace vers l'outil. Ainsi, il est possible d'utiliser des tuyaux rigides reliés à l'organe, qui est fixe par rapport au corps, tandis que le piston est mobile, et non plus des tubes flexibles pour l'amenée de l'huile sous pression.

De plus, le fait que le piston puisse se rétracter pour être logé dans le corps rend le dispositif beaucoup moins encombrant. Par ailleurs, la chambre amont ne sert plus que partiellement au maintien du piston dans la position souhaitée, l'essentiel du maintien étant assuré directement par la pression de la ligne régnant dans le canal du piston et agissant par réaction sur la face transversale aval de la tige tubulaire. L'effort de maintien est ainsi composé d'une partie constante donnée par la chambre amont et d'une partie variable donnée par la pression de la ligne et la face transversale aval de la tige tubulaire. La fonction principale des chambres est le déplacement du piston tubulaire, contrairement à l'art antérieur.

Le piston tubulaire peut comprendre un deuxième canal longitudinal traversant dans lequel est placé, en partie aval, un deuxième connecteur hydraulique destiné à coopérer avec un deuxième connecteur hydraulique monté sur l'outil, lorsque le piston tubulaire est en position déployée, et l'organe peut comprendre une deuxième tige tubulaire présentant un diamètre extérieur correspondant au diamètre du deuxième canal et étant engagée au moins en partie dans ledit deuxième canal, la deuxième tige comprenant un deuxième orifice longitudinal traversant agencé pour pouvoir être relié à son extrémité amont à une deuxième ligne hydraulique de l'engin destinée à alimenter l'outil en huile et à permettre le passage d'huile vers le deuxième canal du piston tubulaire, ledit deuxième orifice définissant avec le deuxième canal du piston une deuxième chambre intérieure apte à être alimentée en huile par la deuxième ligne hydraulique et à former un deuxième conduit de circulation d'huile vers l'outil.

Les chambres amont et aval sont destinées à être alimentées, via le bloc de commande hydraulique, de façon alternée en huile sous pression, afin de permettre le déplacement du piston tubulaire entre ses positions déployée et rétractée.

Lorsque le piston tubulaire est en position déployée et les connecteurs hydrauliques du piston tubulaire et de l'outil connectés, la face transversale aval de la ou des tiges tubulaires forme une section active sur laquelle s'exerce la pression de la ligne hydraulique de l'engin, ladite face transversale aval permettant ainsi, par réaction, d'ajuster l'effort de maintien en position connectée s'exerçant sur le connecteur hydraulique de l'engin, et ce proportionnellement à la pression dans la ligne hydraulique et en temps réel. Cet avantage de l'invention est lié au fait que l'huile circule directement dans la ou les chambres intérieures définies par le canal du piston et l'orifice de l'organe.

En effet, lorsque le piston tubulaire est en position rétractée, et le connecteur fermé, la pression de la ligne provoque une action dans le sens de la sortie du piston s'exerçant sur la section du canal du piston tubulaire. Mais, lorsque les connecteurs de l'engin et du piston sont connectés, le piston étant en position déployée, il existe une section passante pour le fluide. L'effort résiduel qui agit sur le piston et favorise son maintien résulte de la pression sur la section différentielle formée par la face transversale aval de la tige tubulaire diminuée de la section de passage de l'huile. L'effort ainsi obtenu est directement proportionnel à la pression de la ligne, dont la valeur varie dans une large gamme. Ainsi, l'invention permet le maintien du connecteur avec l'effort juste suffisant, correspondant à la pression de la ligne. On évite de ce fait les efforts mécaniques trop importants sur le système d'attache rapide, qui seraient obtenus avec une force de maintien constante plus grande.

Le dispositif peut comprendre des premiers moyens de blocage aptes à bloquer le piston tubulaire en position rétractée, afin d'empêcher la sortie du piston par la montée accidentelle de la pression de ligne et/ou des seconds moyens de blocage aptes à bloquer le piston tubulaire en position déployée, afin d'empêcher la rentrée accidentelle du piston en cas de défaillance.

Ces moyens de blocage comprennent par exemple :
- un clapet piloté aval disposé sur une ligne aval destinée à la liaison de la chambre aval au bloc de commande hydraulique ;
- un clapet piloté amont disposé sur une ligne amont destinée à la liaison de la chambre amont au bloc de commande hydraulique ;
   le clapet aval étant destiné à être piloté à l'ouverture par la présence d'huile sous pression dans la ligne amont et à la fermeture par la chute de la pression dans la ligne amont; le clapet amont étant destiné à être piloté à l'ouverture par la présence d'huile sous pression dans la ligne aval et à la fermeture par la chute de la pression dans la ligne aval.

Lorsque de l'huile sous pression est amenée dans la ligne amont, le clapet aval s'ouvre pour être relié à la bâche et permettre le déploiement du piston en position rétractée. A l'inverse, lorsque de l'huile sous pression est amenée dans la ligne aval, le clapet amont s'ouvre pour être relié à la bâche et permettre la rétraction du piston en position déployée. Les clapets se ferment automatiquement lorsque la pression chute dans la ligne qui les pilote.

Selon une réalisation possible, le dispositif comprend une ligne de décompression débouchant dans l'orifice de la tige tubulaire, munie d'un clapet piloté et destinée à être reliée au bloc de commande hydraulique, ladite ligne de décompression permettant de faire baisser la pression dans la ligne hydraulique avant de commander la déconnexion entre les connecteurs hydrauliques du piston tubulaire et de l'outil. Là encore, cette disposition avantageuse n'est possible que parce que l'huile circule directement dans la ou les chambres intérieures définies par le canal du piston et l'orifice de l'organe.

On prévoit de préférence un contacteur de position qui, destiné à être connecté au bloc de commande hydraulique, est apte à détecter le positionnement correct dudit dispositif par rapport au connecteur de l'outil pour autoriser la connexion hydraulique. Ainsi, seulement quand le positionnement est satisfaisant, le piston du dispositif peut être déplacé vers sa position déployée.

Des moyens de détection du retour du piston tubulaire en position rétractée peuvent être prévus. Ces moyens, destinés à être connectés à des moyens de commande du déverrouillage mécanique entre l'outil et l'engin, visent à empêcher la déconnexion mécanique de l'outil par rapport à l'engin si la déconnexion hydraulique n'est pas complètement réalisée.

Selon une réalisation possible, le connecteur placé dans le piston tubulaire comprend une gaine dans laquelle est montée une pièce coulissante qui, en position de repos, obture l'extrémité aval de la gaine, et qui peut être déplacée longitudinalement vers l'amont sous l'action du connecteur de l'outil, lorsque le piston est déplacé vers sa position déployée, vers une position enfoncée dans laquelle ladite pièce permet le passage d'huile vers l'outil.

Par exemple, au moins une enveloppe tubulaire élastiquement déformable, telle qu'un soufflet, est disposée autour d'au moins un piston tubulaire, l'extrémité amont de l'enveloppe étant fixée à l'extrémité aval du corps et l'extrémité aval de l'enveloppe étant fixée à l'extrémité aval du piston tubulaire et comportant une lèvre d'étanchéité venant en contact avec l'outil lorsque le piston tubulaire est en position déployée.

Selon un deuxième aspect, l'invention concerne un ensemble de connexion hydraulique comprenant au moins un dispositif tel que précédemment décrit et au moins un module de connexion destiné à être monté sur l'outil et comprenant au moins un premier connecteur hydraulique apte à coopérer avec le premier connecteur hydraulique dudit dispositif.

Le connecteur hydraulique de l'outil peut comprendre une gaine cylindrique dont la face extérieure est destinée à coopérer avec la paroi du canal du piston tubulaire, pour permettre le centrage et le guidage du connecteur hydraulique de l'outil dans le canal du piston. En outre, la partie extrême aval du canal du piston tubulaire peut être évasée, la face intérieure du piston tubulaire formant ainsi une paroi de guidage pour l'entrée du connecteur hydraulique de l'outil dans ledit canal.

Le connecteur hydraulique de l'outil peut comprendre une pièce centrale montée de façon fixe à l'intérieur de la gaine cylindrique, ladite pièce centrale étant apte à agir sur le connecteur hydraulique du dispositif lorsque le piston est déplacé vers sa position déployée afin de permettre le passage d'huile vers l'outil.

On décrit à présent, à titre d'exemples non limitatifs, plusieurs formes de réalisation possibles de l'invention, en référence aux figures annexées :
La figure 1 est une vue partielle en perspective du bras d'un engin, sur lequel est monté un outil, montrant deux dispositifs de connexion hydraulique en position déconnectée ;
La figure 2 est une vue de détail de la figure 1, les dispositifs étant en position connectée et permettant l'alimentation en huile de l'outil ;
La figure 3 est une représentation schématique en coupe longitudinale d'un dispositif de connexion hydraulique selon un premier mode de réalisation, dans lequel le piston tubulaire comprend un unique canal ;
La figure 4 est une représentation schématique en coupe longitudinale d'un dispositif de connexion hydraulique selon un deuxième mode de réalisation, dans lequel le piston tubulaire comprend deux canaux ;
La figure 5 est une vue en coupe longitudinale d'un ensemble de connexion hydraulique dont le dispositif comprend deux alésages et deux pistons tubulaires, le dispositif étant en position mécaniquement connectée et hydrauliquement déconnectée ;
Les figures 6 à 8 sont des vues partielles en coupe longitudinale de l'ensemble de la figure 5, à différentes phases successives du procédé de connexion hydraulique ;
La figure 9 est une vue en coupe longitudinale de l'ensemble de connexion de la figure 5 en position hydrauliquement connectée ;
La figure 10 est une vue en coupe longitudinale d'un ensemble de connexion hydraulique à deux canaux, en position mécaniquement connectée, un premier canal étant hydrauliquement connecté et un deuxième canal étant obturé, l'ensemble comprenant en outre des moyens d'étanchéité ; et
La figure 11 est une vue en perspective éclatée d'un système de connexion hydraulique comprenant plusieurs ensembles.

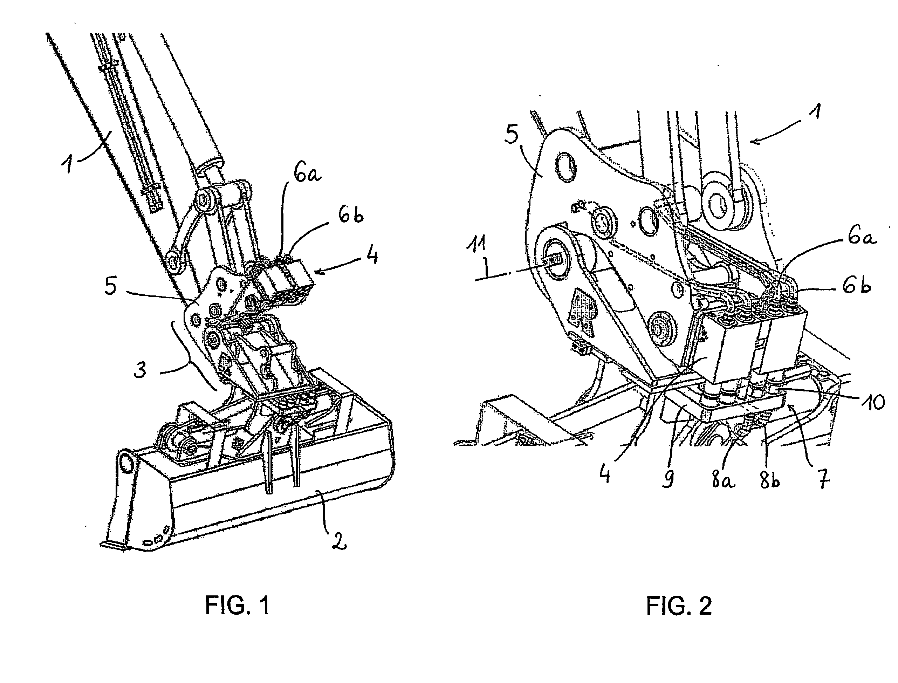

La figure 1 représente la partie inférieure du bras 1 d'un engin, tel qu'une pelle, sur lequel est monté un outil 2 constitué ici par un godet. L'outil 2 et le bras 1 sont mécaniquement couplés par un dispositif d'accrochage 3 comprenant un support 5 et une partie fixée sur l'outil 2, destinés à coopérer l'un avec l'autre.

Sur le support 5 sont fixés un ou plusieurs dispositifs de connexion hydraulique 4. A l'entrée de ces dispositifs 4 sont connectés plusieurs tuyaux 6a, 6b faisant partie du circuit hydraulique de l'engin, dans lesquels circule de l'huile sous pression. Grâce à l'invention, les tuyaux 6a, 6b peuvent être rigides. L'outil 2 comprend un ou plusieurs modules de connexion 7 à la sortie desquels (c'est-à-dire du côté de l'outil 2) sont connectés plusieurs tubes flexibles 8a, 8b. Les modules de connexion 7 comportent un boîtier 9 sur lequel sont placés des connecteurs hydrauliques 10 dirigés vers le dispositif 4.

Sur la figure 1, les dispositifs de connexion hydraulique 4 sont éloignés de l'outil 2, et il n'existe pas de connexion hydraulique entre l'engin et l'outil 2. Par pivotement du support 5 autour d'un axe 11, on amène les dispositifs de connexion hydraulique 4 au voisinage de l'outil 2. On peut alors réaliser la connexion hydraulique entre les tuyaux 6a, 6b du bras 1 et les tubes flexibles 8a, 8b de l'outil 2, par des moyens qui seront décrits ci-après. Ainsi, on peut amener l'huile sous pression vers le circuit hydraulique de l'outil et commander les différents mouvements de l'outil 2.

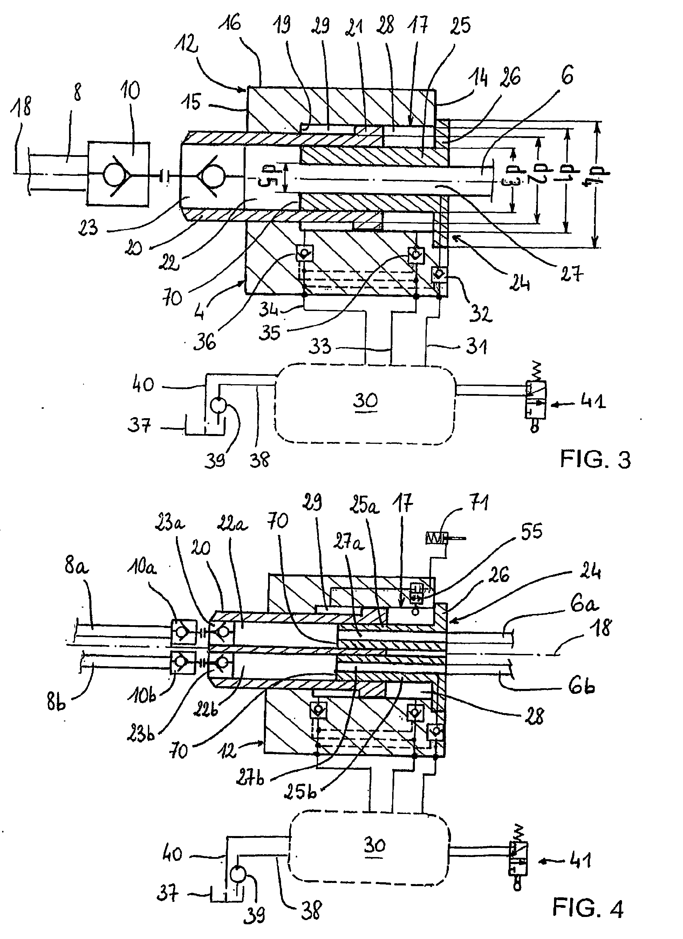

On se rapporte à présent à la figure 3 qui illustre schématiquement un premier mode de réalisation d'un dispositif de connexion hydraulique 4.

Le dispositif 4 comprend un corps 12, ici de forme parallélépipédique, présentant une face transversale amont 14, une face transversale aval 15, et des faces latérales 16. Dans le corps 12 est ménagé un alésage 17 longitudinal, ici cylindrique d'axe 18. L'alésage 17 présente une première portion, de diamètre d1, s'étendant depuis la face transversale amont 14 sur une partie de la longueur du corps 2, par exemple les deux tiers, puis une deuxième portion, de diamètre d2 inférieur à d1, s'étendant jusqu'à la face transversale aval 15. Une face annulaire transversale 19 est ainsi définie entre les deux portions de l'alésage 17.

Le dispositif 4 comprend ensuite un piston tubulaire 20 de diamètre extérieur d2 et de longueur supérieure à la longueur de l'alésage 17, engagé dans l'alésage 17 de façon coaxiale. Le piston 20 présente un épaulement 21 de diamètre d1, tourné vers l'extérieur, situé à sa partie extrême amont. Le piston 20 comprend de plus un canal 22 longitudinal traversant, d'axe 18 et de diamètre d3. A l'intérieur du canal 22, en partie aval, est placé un connecteur hydraulique 23 destiné à coopérer avec le connecteur hydraulique 10 de l'outil 2, lui-même relié, en aval, à un tube flexible 8.

Le dispositif 4 comprend également un organe 24 comportant d'une part une tige tubulaire 25 de diamètre extérieur d3, inférieur à d2, et de longueur de l'ordre des deux tiers de la longueur du corps 12, et présentant une face transversale aval 70. D'autre part, l'organe 24 comporte une collerette 26 de diamètre extérieur d4, supérieur à d1, située à l'extrémité amont de la tige 25. L'organe 24 est placé dans le corps 12, coaxialement, la collerette 26 assurant le maintien contre la face transversale amont 14 et recouvrant l'entrée amont de l'alésage 17, et la tige 25 étant engagée dans le canal 22 du piston 20. Le piston 20 peut ainsi coulisser le long de l'axe 18, à l'intérieur du corps 12 et autour de la tige 25. L'organe 24 comporte en outre un orifice 27 longitudinal traversant, d'axe 18 et de diamètre d5 inférieur à d3, relié en amont à un tuyau 6 d'alimentation en huile sous pression.

Entre la collerette 26, le corps 12, la tige 25 et la face amont de l'épaulement 21 du piston 20 est définie une chambre annulaire amont 28, tandis qu'entre le piston 20, la face aval de l'épaulement 21 du piston 20 et le corps 12 est définie une chambre annulaire aval 29.

Le canal 22 est relié à un bloc de commande hydraulique 30 par une première ligne 31 munie d'un premier clapet piloté 32, la première ligne 31 traversant la collerette 26. Les chambres amont 28 et aval 29 sont reliées au bloc de commande hydraulique 30 par une deuxième ligne 33, respectivement une troisième ligne 34, munies respectivement d'un deuxième et d'un troisième clapets pilotés 35, 36. Le bloc de commande hydraulique 30 est en outre relié à une bâche 37 par une ligne d'alimentation 38 en huile sous pression via une pompe 39, et par une ligne d'échappement 40. Par ailleurs, le bloc de commande hydraulique 30 est connecté à un contacteur de position 41 apte à détecter un positionnement correct du dispositif de connexion hydraulique 4 par rapport à l'outil 2.

Un deuxième mode de réalisation d'un dispositif de connexion hydraulique 4 est schématiquement illustré sur la figure 4.

Le piston tubulaire 20 comprend ici deux canaux 22a, 22b longitudinaux traversants, d'axes parallèles à l'axe 18 de l'alésage 17 du corps 12. A l'intérieur de chaque canal 22a, 22b, en partie aval, est placé un connecteur hydraulique 23a, 23b. Chacun de ces connecteurs 23a, 23b est destiné à coopérer avec un connecteur hydraulique 10a, 10b de l'outil 2, les connecteurs 10a, 10b étant respectivement reliés à un tube flexible 8a, 8b.

L'organe 24 comporte deux tiges tubulaires 25a, 25b engagées chacune dans un canal 22a, 22b, et comportant chacune un orifice 27a, 27b longitudinal traversant, respectivement reliés en amont à un tuyau 6a, 6b d'alimentation en huile sous pression. Le piston 20 peut ainsi coulisser le long de l'axe 18, à l'intérieur du corps 12 et autour des tiges 25a, 25b de l'organe 24.

En variante, pour obtenir la connexion hydraulique de deux tuyaux 6a, 6b côté engin avec deux tubes 8a, 8b côté outil 2, on pourrait utiliser un corps 12 pourvu de deux alésages 17 dans chacun desquels coulisserait un piston 20 muni d'un unique canal 22. Dans ce cas, le dispositif 4 comprendrait deux organes 24 munis chacun d'une unique tige 25.

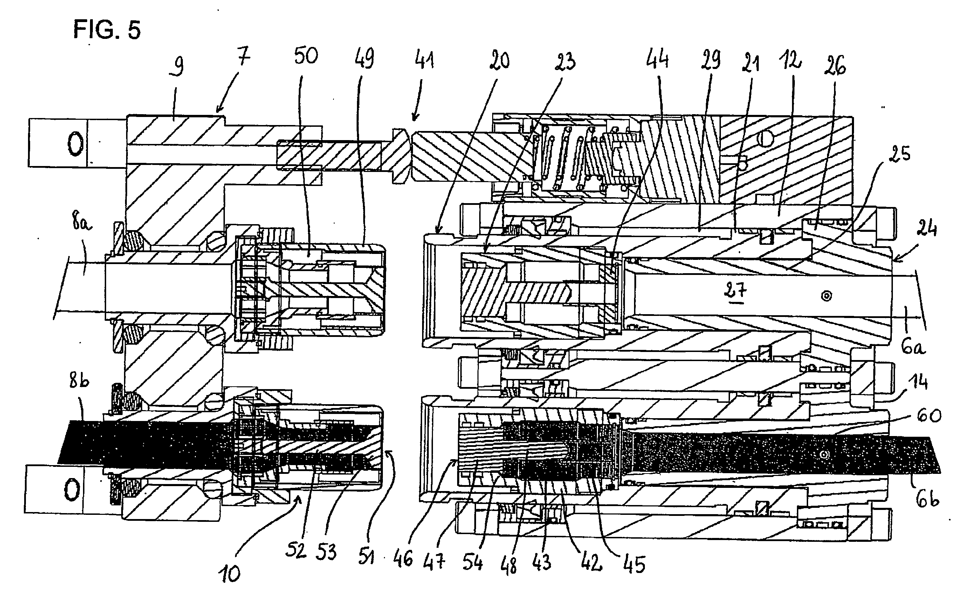

Comme représenté sur la figure 5, le connecteur hydraulique 23 du piston 20 comprend une gaine 42 présentant un orifice 43 longitudinal traversant. En se déplaçant de l'aval vers l'amont, l'orifice 43 présente tout d'abord une partie cylindrique puis s'évase en tronc de cône 54 vers une autre partie cylindrique de plus grand diamètre. A l'intérieur et en partie amont de la gaine 42 est montée une pièce présentant une partie annulaire 44 obturant en partie l'ouverture amont de l'orifice 43 et une partie tubulaire 45 longitudinale creuse s'étendant à l'intérieur de la gaine 42 sur environ un tiers de sa longueur. Dans la gaine 42, en partie aval, est montée une pièce coulissante 46 comportant d'une part une partie aval cylindrique formant obturateur 47 de l'ouverture aval de l'orifice 43, et présentant une extrémité amont évasée en tronc de cône coopérant avec la face en tronc de cône 54 de l'orifice 43, et d'autre part une tige 48 s'étendant vers l'amont, insérée dans la partie tubulaire 45 de la pièce située en amont de la gaine 42.

Le connecteur hydraulique 10 de l'outil 2 comprend une gaine 49 cylindrique présentant un orifice 50 longitudinal traversant dans lequel est montée une pièce 51 comprenant une tige centrale 52 et une tête 53, en amont, obturant l'ouverture amont de l'orifice 50.

On décrit à présent le fonctionnement du dispositif de connexion hydraulique 4, en référence aux figures 3, 4 et 5 à 9.

Initialement, lorsqu'aucune connexion hydraulique entre l'engin et l'outil 2 n'est réalisée, le piston 20 est en position rétractée : l'épaulement 21 est en contact avec la collerette 26, la chambre amont 28 étant de volume très réduit, et le piston ne fait que très peu saillie en aval du corps 12 (voir la figure 5, où la présence d'huile n'a été indiquée, par la partie grisée, que dans l'un des deux pistons, pour simplifier). La pièce coulissante 46 est en position de repos, où elle obture l'extrémité aval de la gaine 42, l'huile contenue dans les tuyaux 6, 6a, 6b ne pouvant pas, de ce fait, sortir en aval du piston 20. De la même façon, le connecteur 10 de l'outil 2 est également obturé, l'huile contenue dans les tubes 8, 8a, 8b ne pouvant pas, de ce fait, sortir en amont du connecteur 10.

Le dispositif de connexion hydraulique 4 est alors approché de l'outil 2, jusqu'à obtenir le positionnement correct, repéré par le contacteur de position 41. Le bloc de commande hydraulique 30 commande alors l'alimentation en huile sous pression de la chambre amont 28, via la deuxième ligne 33 et commande l'ouverture du clapet 36 reliant la chambre aval 29 à la bâche 27, via la troisième ligne 34.

Sous l'effet de la différence de pression régnant dans la chambre amont 28 et dans la chambre aval 29, le piston 20 est contraint de coulisser vers l'aval, se déplaçant ainsi vers sa position déployée. De plus, la pression de l'huile dans le canal 22, amenée par le tuyau 6, crée également un effort tendant à faire sortir le piston 20.

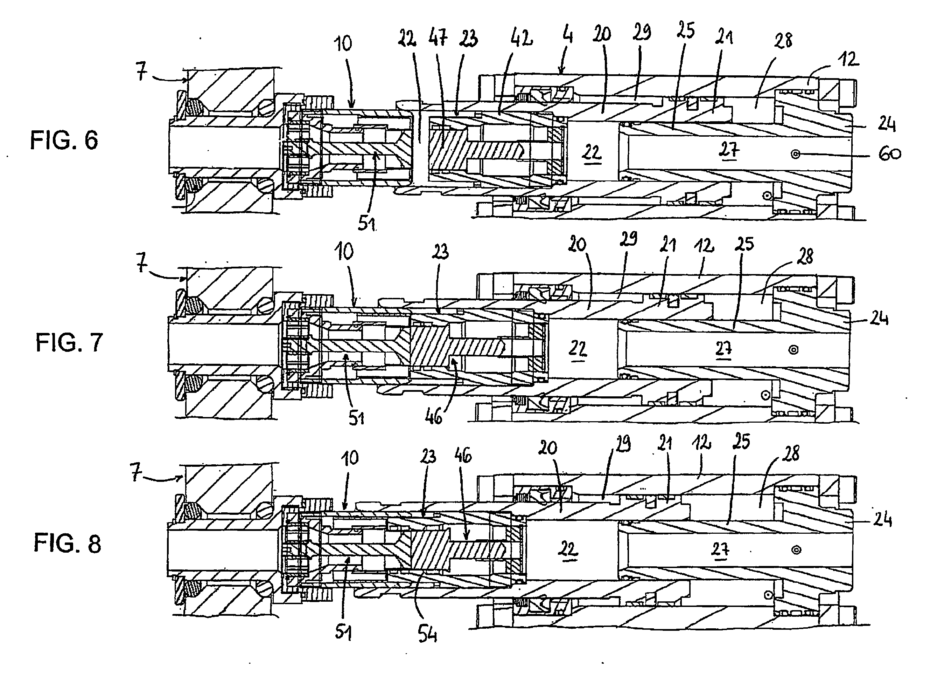

Au cours de ce déplacement, l'extrémité aval du piston 20 arrive en contact avec l'extrémité amont du connecteur 10 de l'outil 2. La gaine 49 du connecteur 10 de l'outil 2 pénètre alors dans le canal 22 du piston 20 (figure 6), le centrage et le guidage de ce mouvement étant assurés par le fait que la partie extrême aval du canal 22 est évasée, tandis que la partie extrême amont de la gaine 49 est arrondie. Le volume de la chambre amont augmente, tandis que le volume de la chambre aval diminue.

Lors de la poursuite du mouvement, la face intérieure du canal 22 du piston 20 coulisse autour de la face extérieure de la gaine 49, jusqu'à ce que le connecteur 23 du piston 20 arrive en contact avec le connecteur 10 de l'outil 2 (figure 7). Le guidage du mouvement d'entrée du connecteur 10 de l'outil 2 dans le piston 20 se fait ainsi sur une longueur suffisante avant l'entrée en contact des deux connecteurs 10, 23. En conséquence, ces derniers arrivent au contact l'un de l'autre dans une position d'alignement très précise.

Puis, le piston 20 continuant à se déployer, la gaine 49 du connecteur 10 vient se loger entre la paroi du canal 22 et la face extérieure de la gaine 42 du connecteur 23. En outre, le connecteur 23 ne pouvant se déplacer vers l'amont par rapport au piston 20, la pièce 51 montée dans la gaine 49 du connecteur 10 de l'outil 2 pousse la pièce coulissante 46 vers l'amont : la tige 48 coulisse dans la partie tubulaire 45 et l'extrémité amont de l'obturateur 47 évasée en tronc de cône s'éloigne de la face en tronc de cône 54 de l'orifice 43. L'ouverture des connecteurs est ainsi réalisée par leur approche relative (figure 8). L'interpénétration des connecteurs 10, 23 est facilitée par le double guidage intérieur / extérieur de la gaine 49 du connecteur 10 de l'outil 2.

Il est à noter que le connecteur femelle 23, c'est-à-dire celui possédant la pièce coulissante 46 qui est poussée vers l'intérieur par la pièce fixe 51 du connecteur mâle 10, est placé du côté de l'engin. Cette configuration est avantageuse, car la pression de l'huile est maîtrisée dans le canal 22 et l'orifice 27, grâce au clapet 32 placé sur la ligne 31. Il est donc facile d'absorber le volume d'huile repoussé à la connexion. Le connecteur mâle 10 est lui placé du côté de l'outil 2, où il n'y a aucun déplacement d'huile à la connexion.

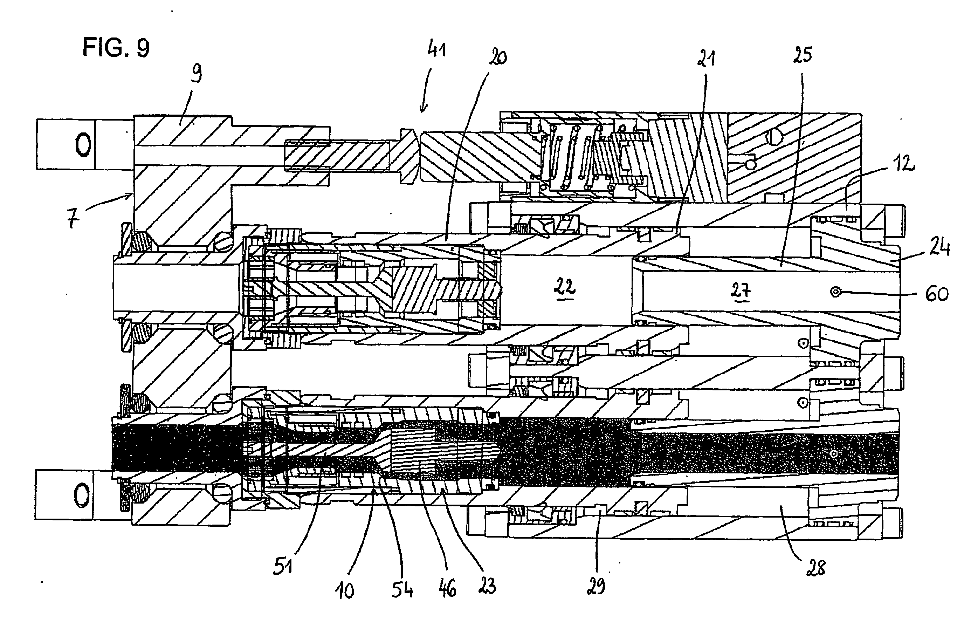

Lorsque le piston 20 est dans sa position totalement déployée (figure 9), le volume de la chambre aval 29 est à son volume le plus réduit et la chambre amont 28 à son volume maximal. L'extrémité aval du piston 20 est en butée contre le module de connexion 7 de l'outil 2. De plus, l'obturateur 47 est décalé vers l'amont et la pièce 51 montée dans la gaine 49 du connecteur 10 de l'outil 2 est également située en amont par rapport à la face en tronc de cône 54 de l'orifice 43 de la gaine 42 du connecteur 23 du dispositif de connexion 4. En conséquence, l'huile sous pression amenée par les tuyaux 6 peut passer autour des pièces 46 et 51, à l'intérieur des gaines 42 et 49, vers les tubes 8 de l'outil 2. La connexion hydraulique de l'engin et de l'outil 2 est ainsi réalisée.

Dans cette position déployée, l'huile provenant des tuyaux 6 permet le maintien de l'ensemble en position hydrauliquement connectée, par la pression exercée sur la face transversale aval 70 de la tige tubulaire 25 : section différentielle entre la totalité du canal 22 (diamètre d3) et la section de passage (diamètre d5). L'effort ainsi obtenu est directement proportionnel à la pression de la ligne 6.

En complément, pour éviter toute rétractation accidentelle du vérin, le bloc de commande 30 alimente constamment la chambre amont 28 en pression. Si cette pression venait à chuter accidentellement, le clapet 35 maintiendrait le piston 20 en position déployée, ce qui assure un fonctionnement sans défaut du dispositif 4.

Lorsque l'on souhaite déconnecter hydrauliquement l'outil 2 de l'engin, le bloc de commande 30 alimente en huile sous pression la chambre aval 29, via la troisième ligne 34, qui pilote le premier clapet 32 et procède à la décompression du canal 22, via la première ligne 31, puis l'ouverture du clapet 35 reliant ainsi la chambre amont 28 à la bâche 27, via la deuxième ligne 33.

Sous l'effet de la différence de pression régnant dans la chambre amont 28 et dans la chambre aval 29, le piston 20 est contraint de coulisser vers l'amont, se déplaçant ainsi vers sa position rétractée. Il se produit alors les déplacements inverses de ceux précédemment décrits. Notamment, la pièce 46 reprend sa position de repos, en contact avec la face en tronc de cône 54 de l'orifice 43, obturant ainsi l'ouverture aval du connecteur 23 et donc du canal 22 du piston 20, les connecteurs 10, 23 jouant leur rôle d'obturateur des lignes 6 côté outil et 8 côté engin.

A la fin de la phase de déconnexion, le bloc de commande 30 fait chuter la pression dans la ligne 34 obturant les clapets 35 et 32, le piston 20 étant maintenu en position rétractée par le clapet 36.

Toute sortie intempestive du piston 20 par la montée accidentelle de la pression d'huile dans les tuyaux 6 est ainsi évitée. Cette configuration est maintenue lorsque l'outil 2 est mécaniquement déconnecté du bras 1 de l'engin.

Des moyens de détection 55 du retour du piston 20 en position rétractée sont prévus sur le dispositif de connexion 4 (voir figure 4). Ces moyens 55, qui peuvent être mécaniques, hydrauliques ou électro-hydrauliques, sont connectés à des moyens 71 de commande du déverrouillage mécanique entre l'outil et l'engin. Ils permettent ainsi de garantir la sécurité du dispositif à la déconnexion, en empêchant le déverrouillage mécanique tant que la déconnexion hydraulique n'est pas complètement réalisée.

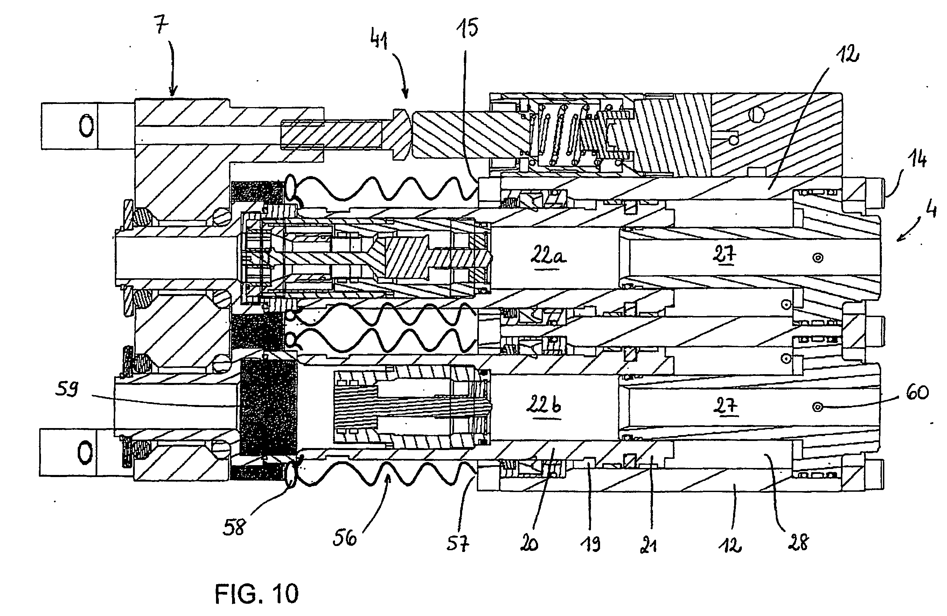

On se rapporte à présent à la figure 10.

Selon cette réalisation, le dispositif de connexion 4 comprend des moyens destinés à le protéger contre la poussière. Ces moyens comprennent une enveloppe tubulaire élastiquement déformable, formée ici par un soufflet 56 prévu pour chacun des pistons 20. L'extrémité amont 57 du soufflet 56 est fixée à la face aval 15 du corps 12 et l'extrémité aval du soufflet 56 est fixée à l'extrémité aval du piston 20. L'extrémité aval est pourvue d'une lèvre d'étanchéité 58 destinée à venir en contact avec le module 7, par exemple au niveau de l'embase du connecteur 10. Ainsi, le soufflet 56 est déployé vers l'outil 2 ou replié vers le corps 12 en même temps que le piston 20.

En variante, il peut être prévu un soufflet 56 global disposé autour des deux pistons 20, et protégeant ainsi les deux voies, à la place des deux soufflets 56 entourant chacun un unique piston 20. Dans ce cas, l'espace compris entre les deux pistons est également protégé de la poussière. Par ailleurs, le soufflet 56 pourrait n'être relié qu'au corps 12 à son extrémité amont 57, le déplacement du soufflet 56 étant alors assuré par un actionneur distinct dédié.

Sur la figure 10 est représenté un ensemble de connexion à deux voies dans lequel un unique canal 22a est utilisé. Le deuxième canal 22b n'est pas utilisé, et il peut alors être obturé par un bouchon 59, disposé à la place du connecteur 10b correspondant, sur l'outil 2. Le bouchon 59 sert alors de surface de contact pour l'extrémité aval (lèvre d'étanchéité 58) du soufflet 56.

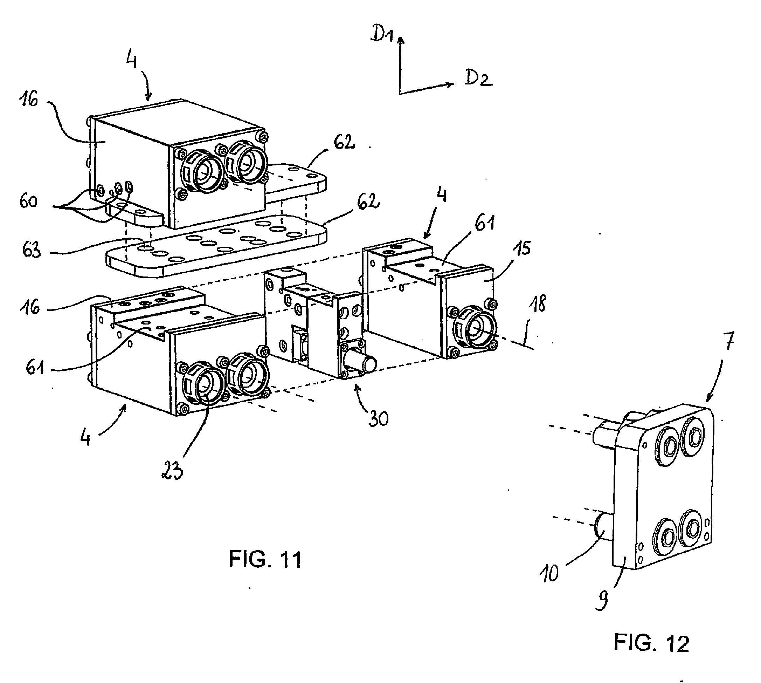

Enfin, on se rapporte aux figures 11 et 12.

Les lignes 31, 33, 34 débouchent sur une face latérale 16 extérieure du corps 12 chacune par un trou 60, ce qui permet d'alimenter de proche en proche des dispositifs de connexion 4 juxtaposés.

En outre, le corps 12 comprend au moins une rainure 61 pratiquée sur l'une de ses faces latérales 16. Dans cette rainure 61 peut être fixée une plaque support 62 destinée à l'assemblage du dispositif de connexion 4 sur l'engin ou de deux dispositifs 4 juxtaposés entre eux. A cet effet, les plaques 61 peuvent être munies de trous 63 destinés au passage de vis (non représentées). La rainure 61 sert également de référence d'alignement et permet la reprise des efforts résultant de l'action des pistons 20.

On peut ainsi former un ensemble de connexion hydraulique engin - outil complètement modulaire, par juxtaposition et assemblage mécanique et hydraulique de plusieurs dispositifs de connexion 4 côté engin (figure 11) et de plusieurs modules de connexion 7 correspondants côté outil 2 (figure 12), ainsi que d'un bloc de commande 30. L'assemblage peut se faire dans deux directions D1 et D2 perpendiculaires, comme représenté sur la figure 11, de façon très compacte. Les dispositifs 4 et modules 7 peuvent comporter une ou plusieurs voies, selon les besoins. L'alimentation en huile est assurée par le bloc de commande 30 qui distribue l'huile de proche en proche par les trous 60 ménagés sur chaque dispositif 4.

Parmi les principaux avantages procurés par la structure selon l'invention, qui définit une chambre intérieure dans le piston 20, on peut citer les points suivants :
- le canal 22 du piston 20 est alimenté directement par la pression de la ligne, ce qui permet d'obtenir, sur les connecteurs, un effort de maintien directement proportionnel à cette pression, et ce en temps réel ;
- il est possible de décomprimer la ligne à la déconnexion par le premier clapet piloté 32, qui assure le retour à la bâche 37 du surplus de pression (fonction intégrée au dispositif 4) ;
- à la connexion, la ligne est décomprimée par construction même, puisque le volume de la chambre intérieure grandit lorsque le piston coulisse vers l'aval ce qui, dans le même temps, absorbe la variation de volume provoquée par le connecteur mâle au moment de la connexion ;
- la position de la chambre à l'intérieur même du piston permet de prévoir un raccord immobile à l'entrée du dispositif de connexion 4. De plus, on peut ainsi obtenir une longueur de construction réduite et un dispositif de connexion plus compact. L'encombrement du dispositif est considérablement réduit : composition de l'ensemble par 4 pièces principales et leurs étanchéités, gain de poids d'environ 20%, gain sur la longueur de l'ensemble d'environ 30%, intégration de la fonction d'amortissement hydraulique de fin de course possible.

Il va de soi que l'invention n'est pas limitée à la forme de réalisation décrite ci-dessus à titre d'exemple mais qu'elle en embrasse au contraire toutes les variantes de réalisation, dans les limites des revendications.

## Revendications

1. Dispositif destiné à réaliser l'alimentation en huile d'un outil (2) monté sur un engin porteur, ledit dispositif (4) étant destiné à être monté sur ledit engin, et comprenant :
- un corps (12) dans lequel est ménagé au moins un alésage (17) longitudinal ;
- un piston tubulaire (20) engagé dans ledit alésage (17), présentant au moins un premier canal (22, 22a) longitudinal traversant et un épaulement (21) tourné vers l'extérieur, disposé en partie amont et coopérant avec la face intérieure de l'alésage (17) ;
- une chambre annulaire aval (29), définie entre l'aval de l'épaulement (21) du piston tubulaire (20) et l'alésage (17), destinée à être reliée à un bloc de commande hydraulique (30) ;
- un premier connecteur hydraulique (23, 23a) placé dans le premier canal (22, 22a) du piston tubulaire (20), en partie aval, et destiné à coopérer avec un premier connecteur hydraulique (10, 10a) monté sur ledit outil (2) ;
- un organe (24) comprenant au moins une première tige tubulaire (25, 25a) de diamètre extérieur (d3) correspondant au diamètre du premier canal (22, 22a) du piston tubulaire (20), ladite tige tubulaire (25, 25a) étant au moins partiellement engagée dans ledit premier canal (22, 22a) à partir de l'amont et délimitant avec le corps (12) et en amont de l'épaulement (21) du piston tubulaire (20) une chambre annulaire amont (28), destinée à être reliée à un bloc de commande hydraulique (30), la première tige tubulaire (25, 25a) comprenant un premier orifice (27, 27a) longitudinal traversant destiné à permettre le passage d'huile vers le premier canal (22, 22a) du piston tubulaire (20) et l'alimentation de l'outil (2) en huile ;
le piston tubulaire (20) étant apte à coulisser longitudinalement dans l'alésage (17) en fonction des pressions imposées dans les chambres aval (29) et amont (28) par le bloc de commande hydraulique (30), entre :
- une position déployée dans laquelle le premier connecteur hydraulique (23, 23a) du piston tubulaire (20) est apte à coopérer avec le premier connecteur hydraulique (10, 10a) de l'outil (2) pour mettre en communication la première ligne hydraulique (6, 6a) de l'engin et une première ligne hydraulique (8, 8a) de l'outil (2) ;
- et une position rétractée, dans laquelle le premier connecteur hydraulique (23, 23a) du piston tubulaire (20) peut être déconnecté du premier connecteur hydraulique (10, 10a) de l'outil (2).
**caractérisé en ce que** le premier orifice (27, 27a) de l'organe (24) est agencé pour pouvoir être relié en amont à une première ligne hydraulique (6, 6a) de l'engin et **en ce que** ledit premier orifice (27, 27a) définit avec le premier canal (22, 22a) du piston (20) une première chambre intérieure apte à être alimentée en huile par la première ligne hydraulique (6, 6a) et à former un premier conduit de circulation d'huile vers l'outil.

2. Dispositif selon la revendication 1, **caractérisé en ce que** le piston tubulaire (20) comprend un deuxième canal (22b) longitudinal traversant dans lequel est placé, en partie aval, un deuxième connecteur hydraulique (23b) destiné à coopérer avec un deuxième connecteur hydraulique (10b) monté sur l'outil (2), lorsque le piston tubulaire (20) est en position déployée, et **en ce que** l'organe (24) comprend une deuxième tige tubulaire (25b) présentant un diamètre extérieur correspondant au diamètre du deuxième canal (22b) et étant engagée au moins en partie dans ledit deuxième canal (22b), la deuxième tige (25b) comprenant un deuxième orifice (27b) longitudinal traversant agencé pour pouvoir être relié à son extrémité amont à une deuxième ligne hydraulique (6b) de l'engin destinée à alimenter l'outil (2) en huile et à permettre le passage d'huile vers le deuxième canal (22b) du piston tubulaire (20), ledit deuxième orifice (27b) définissant avec le deuxième canal (22b) du piston (20) une deuxième chambre intérieure apte à être alimentée en huile par la deuxième ligne hydraulique (6b) et à former un deuxième conduit de circulation d'huile vers l'outil.

3. Dispositif selon la revendication 1 ou 2, **caractérisé en ce que,** lorsque le piston tubulaire (20) est en position déployée et les connecteurs hydrauliques (23, 10) du piston tubulaire (20) et de l'outil (2) connectés, la face transversale aval (70) de la ou des tiges tubulaires (25, 25a, 25b) forme une section active sur laquelle s'exerce la pression de la ligne hydraulique (6) de l'engin, ladite face transversale aval (70) permettant ainsi, par réaction, d'ajuster l'effort de maintien en position connectée s'exerçant sur le connecteur hydraulique (23) de l'engin, et ce proportionnellement à la pression dans la ligne hydraulique (6) et en temps réel.

4. Dispositif selon l'une des revendications 1 à 3, **caractérisé en ce qu'**il comprend des premiers moyens de blocage aptes à bloquer le piston tubulaire (20) en position rétractée.

5. Dispositif selon l'une des revendications 1 à 4, **caractérisé en ce qu'**il comprend des seconds moyens de blocage aptes à bloquer le piston tubulaire (20) en position déployée.

6. Dispositif selon la revendication 4 ou 5, **caractérisé en ce que** les premiers et/ou les deuxièmes moyens de blocage comprennent :
- un clapet piloté aval (36) disposé sur une ligne aval (34) destinée à la liaison de la chambre aval (29) au bloc de commande hydraulique (30) ;
- un clapet piloté amont (35) disposé sur une ligne amont (33) destinée à la liaison de la chambre amont (28) au bloc de commande hydraulique (30) ;
le clapet aval (36) étant destiné à être piloté à l'ouverture par la présence d'huile sous pression dans la ligne amont (33) et à la fermeture par la chute de la pression dans la ligne amont (33) ;
le clapet amont (35) étant destiné à être piloté à l'ouverture par la présence d'huile sous pression dans la ligne aval (34) et à la fermeture par la chute de la pression dans la ligne aval (34).

7. Dispositif selon l'une des revendications 1 à 6, **caractérisé en ce qu'**il comprend une ligne de décompression (31) débouchant dans l'orifice (27) de la tige tubulaire (25, 25a, 25b), munie d'un clapet piloté (32) et destinée à être reliée au bloc de commande hydraulique (30), ladite ligne de décompression (31) permettant de faire baisser la pression dans la ligne hydraulique (6) de l'engin avant de commander la déconnexion des connecteurs hydrauliques (23, 10) du piston tubulaire (20) et de l'outil (2).

8. Dispositif selon l'une des revendications 1 à 7, **caractérisé en ce qu'**il comprend un contacteur de position (41) qui, destiné à être connecté au bloc de commande hydraulique (30), est apte à détecter le positionnement correct dudit dispositif (4) par rapport au connecteur de l'outil (2) pour autoriser la connexion hydraulique.

9. Dispositif selon l'une des revendications 1 à 8, **caractérisé en ce qu'**il comprend des moyens de détection (55) du retour du piston tubulaire (20) en position rétractée, lesdits moyens de détection (55) étant destinés à être connectés à des moyens de commande (71) du déverrouillage mécanique entre l'outil (2) et l'engin.

10. Dispositif selon l'une des revendications 1 à 9, **caractérisé en ce que** le connecteur (23) placé dans le piston tubulaire (20) comprend une gaine (42) dans laquelle est montée une pièce coulissante (46) qui, en position de repos, obture l'extrémité aval de la gaine (42), et qui peut être déplacée longitudinalement vers l'amont sous l'action du connecteur (10) de l'outil (2), lorsque le piston tubulaire (20) est déplacé vers sa position déployée, vers une position enfoncée dans laquelle ladite pièce (46) permet le passage d'huile vers l'outil (2).

11. Dispositif selon l'une des revendications 1 à 10, **caractérisé en ce qu'**il comprend au moins une enveloppe tubulaire élastiquement déformable, telle qu'un soufflet (56), disposée autour d'au moins un piston tubulaire (20), l'extrémité amont (57) de l'enveloppe étant fixée à l'extrémité aval (15) du corps (12) et l'extrémité aval de l'enveloppe étant fixée à l'extrémité aval du piston tubulaire (20) et comportant une lèvre d'étanchéité (58).

12. Dispositif selon l'une des revendications 1 à 11, **caractérisé en ce qu'**il comprend au moins un trou (60) débouchant d'une part dans une ligne (31) munie d'un clapet piloté (32) et reliée à l'orifice longitudinal (27) de la tige tubulaire (25) et d'autre part sur une face latérale extérieure (16) du corps (12), afin de permettre le passage d'huile entre les canaux (22) des pistons tubulaires (20) de deux dispositifs (4) juxtaposés.

13. Dispositif selon l'une des revendications 1 à 12, **caractérisé en ce que** le corps (12) comprend au moins une rainure (61) pratiquée sur l'une de ses faces latérales (16), et dans laquelle peut être fixée une plaque support (62) destinée à l'assemblage dudit dispositif (4) sur l'engin ou de deux dispositifs (4) juxtaposés entre eux.

14. Ensemble de connexion hydraulique **caractérisé en ce qu'**il comprend au moins un dispositif (4) selon l'une des revendications 1 à 13 et au moins un module de connexion (7) destiné à être monté sur l'outil (2) et comprenant au moins un premier connecteur hydraulique (10, 10a) apte à coopérer avec le premier connecteur hydraulique (23, 23a) dudit dispositif (4).

15. Ensemble selon la revendication 14, **caractérisé en ce que** le connecteur hydraulique (10) de l'outil (2) comprend une gaine cylindrique (49) dont la face extérieure est destinée à coopérer avec la paroi du canal (22) du piston tubulaire (20).

16. Ensemble selon la revendication 15, **caractérisé en ce que** la partie extrême aval du canal (22) du piston tubulaire (20) est évasée, la face intérieure du piston tubulaire (20) formant ainsi une paroi de guidage pour l'entrée du connecteur hydraulique (10) de l'outil (2) dans ledit canal (22).

17. Ensemble selon l'une des revendications 14 à 16 **caractérisé en ce qu'**il comprend en outre un bloc de commande hydraulique (30), connecté à un contacteur de position (41) entre le dispositif (4) et l'outil (2) et comportant :
- une ligne d'alimentation (38) en huile sous pression et une ligne d'échappement (40) vers une bâche (37) ;
- des première, deuxième et troisième lignes (31, 33, 34) munies respectivement d'un premier, deuxième et troisième clapets pilotés (32, 35, 36), reliant le bloc de commande hydraulique (30) respectivement au canal (22) du piston tubulaire (20), à la chambre amont (28) et à la chambre aval (29).

## Claims

1. Device for supplying oil to a tool (2) mounted on a carrier machine, said device (4) being intended to be mounted on said machine, and comprising:
- a body (12) in which at least one longitudinal bore (17) is formed;
- a tubular piston (20) e ngaged in said bore (17), having at least one first longitudinal through -channel (22, 22a) and a shoulder (21) turned to the outside, arranged partially upstream and cooperating with the internal face of the bore (17);
- a downstream annular chamber (29) defined between the downstream portion of the shoulder (21) of the tubular piston (20) and the bore (17), intended to be connected to a hydraulic control block (30);
- a first hydraulic connector (23, 23a) placed in the first channel (22, 22a) of the tubu lar piston (20), in the downstream part, and intended to cooperate with a first hydraulic connector (10, 10a) mounted on said tool (2);
- a member (24) comprising at least one first tubular rod (25, 25a) having an external diameter (d3) corresponding to the diameter of the first channel (22, 22a) of the tubular piston (20), said tubular rod (25, 25a) being at least partially engaged in said first channel (22, 22a) from the upstream portion and defining with the body (12), and upstream of the shoulder (21) of the tubular piston (20), an upstream annular chamber (28) intended to be connected to a hydraulic control block (30), the first tubular rod (25, 25a) comprising a first longitudinal through - orifice (27, 27a) intended to permit the passage of oil towards the first channel (22, 22a) of the tubular piston (20) and the supply of oil to the tool (2);
- the tubular piston (20) being designed to slide longitudinally in the bore (17), depending on the pressure imposed in the downstream (29) and upstream (28) ch ambers by the hydraulic control block (30) between:
- an extended position in which the first hydraulic connector (23, 23a) of the tubular piston (20) is designed to cooperate with the first hydraulic connector (10, 10a) of the tool (2) in order to place the first hydraulic line (6, 6a) of the machine in communication with a first hydraulic line (8, 8a) of the tool (2);
- and a retracted position in which the first hydraulic connector (23, 23a) of the tubular piston (20) may be disconnected from the first hydraulic connector (10, 10a) of the tool (2),
**characterized in that** the first orifice (27, 27a) of the member (24) is arranged to be able to be connected upstream to a first hydraulic line (6, 6a) of the machine and **in that** said first orifice (27, 27a) defines with the first channel (22, 22a) of the piston (20) a first internal chamber designed to be supplied with oil by the first hydraulic line (6, 6a) and to form a first conduit for circulating oil to the tool.

2. Device according to Claim 1, **characterized in that** the tubular piston (20) comprises a second longitudinal through-channel (22b) in which, in the downstream part, a second hydraulic connector (23b) is placed which is intended to cooperate with a second hydraulic connector (10b) mounted on th e tool (2) when the tubular piston (20) is in the extended position, and **in that** the member (24) comprises a second tubular rod (25b) having an external diameter corresponding to the diameter of the second channel (22b) and being engaged at least partially in said second channel (22b), the second rod (25b) comprising a second longitudinal through -orifice (27b) arranged to be able to be connected at its upstream end to a second hydraulic line (6b) of the machine, which is intended to supply oil to the tool (2) and to permit the passage of oil to the second channel (22b) of the tubular piston (20), said second orifice (27b) defining with the second channel (22b) of the piston (20) a second internal chamber designed to be supplied with oil by the second hydraul ic line (6b) and to form a second conduit for circulating oil to the tool.

3. Device according to Claim 1 or 2, **characterized in that** when the tubular piston (20) is in the extended position and the hydraulic connectors (23, 10) of the tubular piston (20) and of the tool (2) are connected, the downstream transverse face (70) of the tubular rod(s) (25, 25a, 25b) forms a functional section on which the pressure of the hydraulic line (6) of the machine is exerted, said downstream transverse face (70) thus mak ing it possible, by reaction, to adjust the force which is exerted to maintain the hydraulic connector (23) of the machine in the connected position, and this is proportional to the pressure in the hydraulic line (6) in real time.

4. Device according to one of Claims 1 to 3, **characterized in that** it comprises first blocking means designed to block the tubular piston (20) in the retracted position.

5. Device according to one of Claims 1 to 4, **characterized in that** it comprises second blocking means designed to block the tubular piston (20) in the extended position.

6. Device according to Claim 4 or 5, **characterized in that** the first and/or the second blocking means comprise:
- a downstream pilot -controlled valve (36) arranged on a downstream line (34) int ended to connect the downstream chamber (29) to the hydraulic control block (30);
- an upstream pilot -controlled valve (35) arranged on an upstream line (33) intended to connect the upstream chamber (28) to the hydraulic control block (30);
- the downstream valve (36) being intended to be driven into the open position by the presence of pressurized oil in the upstream line (33) and into the closed position by the drop in pressure in the upstream line (33);
- the upstream valve (35) being intended to be d riven into the open position by the presence of pressurized oil in the downstream line (34) and into the closed position by the drop in pressure in the downstream line (34).

7. Device according to one of Claims 1 to 6, **characterized in that** it comprises a decompression line (31), opening into the orifice (27) of the tubular rod (25, 25a, 25b), provided with a pilot -controlled valve (32) and intended to be connected to the hydraulic control block (30), said decompression line (31) making it possible to lower the pressure in the hydraulic line (6) of the machine before controlling the disconnection of the hydraulic connectors (23, 10) of the tubular piston (20) and of the tool (2).

8. Device according to one of Claims 1 to 7, **characterized in that** it compris es a position switch (41), intended to be connected to the hydraulic control block (30), which is designed to detect the correct positioning of said device (4) relative to the connector of the tool (2) to permit the hydraulic connection.

9. Device accordi ng to one of Claims 1 to 8, **characterized in that** it comprises means for detecting (55) the return of the tubular piston (20) into the retracted position, said detection means (55) being intended to be connected to control means (71) for mechanically unlocking the tool (2) and the machine.

10. Device according to one of Claims 1 to 9, **characterized in that** the connector (23) placed in the tubular piston (20) comprises a sheath (42) in which is mounted a sliding part (46) which, in the resting position, seals the downstream end of the sheath (42) and which may be displaced longitudinally upstream under the action of the connector (10) of the tool (2), when the tubular piston (20) is displaced into its extended position, into a pushed -in position in which said part (46) permits the passage of oil to the tool (2).

11. Device according to one of Claims 1 to 10, **characterized in that** it comprises at least one elastically deformable tubular casing, such as a bellows (56), arranged around at least one tubular piston (20), the upstream end (57) of the casing being fixed to the downstream end (15) of the body (12) and the downstream end of the casing being fixed to the downstream end of the tubular piston (20) and comprising a sealing lip (58).

12. Device according to one of Claims 1 to 11, **characterized in that** it comprises at least one hole (60) which opens, on the one hand, into a line (31) provided with a pilot -controlled valve (32) and connected to the longitudinal orifice (27) of the tubular rod (25) and, on th e other hand, onto an external lateral face (16) of the body (12) in order to permit the passage of oil between the channels (22) of the tubular pistons (20) of two juxtaposed devices (4).

13. Device according to one of Claims 1 to 12, **characterized in that** the body (12) comprises at least one groove (61) formed on one of its lateral faces (16), and in which a support plate (62) may be fixed intended for the mounting of said device (4) on the machine or two devices (4) juxtaposed with one another.

14. Hydraulic connection assembly, **characterized in that** it comprises at least one device (4) according to one of Claims 1 to 13, and at least one connection module (7) intended to be mounted on the tool (2) and comprising at least one first hydraulic connector ( 10, 10a) designed to cooperate with the first hydraulic connector (23, 23a) of said device (4).

15. Assembly according to Claim 14, **characterized in that** the hydraulic connector (10) of the tool (2) comprises a cylindrical sheath (49), the external face thereof being intended to cooperate with the wall of the channel (22) of the tubular piston (20).

16. Assembly according to Claim 15, **characterized in that** the extreme downstream part of the channel (22) of the tubular piston (20) is flared, the internal f ace of the tubular piston (20) thus forming a guide wall for the entry of the hydraulic connector (10) of the tool (2) in said channel (22).

17. Assembly according to one of Claims 14 to 16, **characterized in that** it further comprises a hydraulic control block (30), connected to a position switch (41) between the device (4) and the tool (2) and comprising:
- a supply line (38) for pressurized oil and an outlet line (40) to a tank (37);
- first, second and third lines (31, 33, 34) respectively provided wit h a first, second and third pilot-controlled valve (32, 35, 36) respectively connecting the hydraulic control block (30) to the channel (22) of the tubular piston (20), to the upstream chamber (28) and to the downstream chamber (29).

## Patentansprüche

1. Vorrichtung, die dazu bestimmt ist, die Ölversorgung eines auf ein Trägergerät montierten Werkzeugs (2) zu realisieren, wobei die Vorrichtung (4) dazu bestimmt ist, auf das Gerät montiert zu werden und Folgendes enthält:
- einen Körper (12), in dem mindestens eine Längsbohrung (17) ausgespart ist;
- einen in die Bohrung (17) eingeführten rohrförmigen Kolben (20), der mindestens einen ersten Längsdurchgangskanal (22, 22a) und eine nach außen weisende Schulter (21) aufweist, die im strom aufwärts liegenden Bereich angeordnet ist und mit der Innenseite der Bohrung (17) zusammenwirkt;
- eine stromabwärts liegende Ringkammer (29), die zwischen der stromabwärts liegenden Seite der Schulter (21) des rohrförmigen Kolbens (20) und der Bohrung (1 7) definiert und dazu bestimmt ist, mit einem hydraulischen Steuerblock (30) verbunden zu werden;
- einen ersten hydraulischen Verbinder (23, 23a), der in dem ersten Kanal (22, 22a) des rohrförmigen Kolbens (20) im stromabwärts liegenden Bereich angeordnet und dazu bestimmt ist, mit einem ersten hydraulischen Verbinder (10, 10a) zusammenzuwirken, der auf das Werkzeug (2) montiert ist;
- ein Element (24), das mindestens eine erste rohrförmige Stange (25, 25a) aufweist, deren Außendurchmesser (d3) dem Durch messer des ersten Kanals (22, 22a) des rohrförmigen Kolbens (20) entspricht, wobei die rohrförmige Stange (25, 25a) zumindest zum Teil in den ersten Kanal (22, 22a) von der stromaufwärts liegenden Seite eingeführt ist und mit dem Körper (12) und stromaufwärts von der Schulter (21) des rohrförmigen Kolbens (20) eine stromaufwärts liegende Ringkammer (28) begrenzt, die dazu bestimmt ist, mit einem hydraulischen Steuerblock (30) verbunden zu werden, wobei die erste rohrförmige Stange (25, 25a) eine erste Längs durchgangsöffnung (27, 27a) enthält, die dazu bestimmt ist, den Durchgang von Öl zum ersten Kanal (22, 22a) des rohrförmigen Kolbens (20) und die Versorgung des Werkzeugs (2) mit Öl zu erlauben;
wobei der rohrförmige Kolben (20) in Längsrichtung in der Bohrung (17) in Abhängigkeit von den in der stromabwärts (29) und stromaufwärts liegenden Kammer (28) durch den hydraulischen Steuerblock (30) vorgegebenen Drücken gleiten kann zwischen:
- einer ausgefahrenen Stellung, in der der erste hydraulische Verbinde r (23, 23a) des rohrförmigen Kolbens (20) mit dem ersten hydraulischen Verbinder (10, 10a) des Werkzeugs (2) zusammenwirken kann, um die erste Hydraulikleitung (6, 6a) des Geräts und eine erste Hydraulikleitung (8, 8a) des Werkzeugs (2) miteinander zu verbinden;
- und einer eingefahrenen Stellung, in der der erste hydraulische Verbinder (23, 23a) des rohrförmigen Kolbens (20) vom ersten hydraulischen Verbinder (10, 10a) des Werkzeugs (2) getrennt werden kann,
**dadurch gekennzeichnet, dass** die erste Öffnung (27, 27a) des Elements (24) angeordnet ist, um stromaufwärts mit einer ersten Hydraulikleitung (6, 6a) des Geräts verbunden werden zu können, und dass die erste Öffnung (27, 27a) mit dem ersten Kanal (22, 22a) des Kolbens (20) eine erste innere Kammer definiert, die von der ersten Hydraulikleitung (6, 6a) mit Öl versorgt werden und ein erstes Ölzirkulationsrohr zum Werkzeug bilden kann.

2. Vorrichtung nach Anspruch 1, **dadurch gekennzeichnet, dass** der rohrförmige Kolben (20) einen zweiten Längsdurchgangsk anal (22b) enthält, in dem im stromabwärts liegenden Bereich ein zweiter hydraulischer Verbinder (23b) angeordnet ist, der dazu bestimmt ist, mit einem auf das Werkzeug (2) montierten zweiten hydraulischen Verbinder (10b) zusammenzuwirken, wenn der rohrförmige Kolben (20) in der ausgefahrenen Stellung ist, und dass das Element (24) eine zweite rohrförmige Stange (25b) enthält, die einen Außendurchmesser entsprechend dem Durchmesser des zweiten Kanals (22b) hat und zumindest zum Teil in den zweiten Kanal (22 b) eingeführt ist, wobei die zweite Stange (25b) eine zweite Längsdurchgangsöffnung (27b) enthält, die angeordnet ist, um an ihrem stromaufwärts liegenden Ende mit einer zweiten Hydraulikleitung (6b) des Geräts verbunden werden zu können, die dazu bestimmt ist, das Werkzeug (2) mit Öl zu versorgen und den Durchgang von Öl zum zweiten Kanal (22b) des rohrförmigen Kolbens (20) zu erlauben, wobei die zweite Öffnung (27b) mit dem zweiten Kanal (22b) des Kolbens (20) eine zweite innere Kammer definiert, die von der zweiten Hydraulikleitung (6b) mit Öl versorgt werden und ein zweites Ölzirkulationsrohr zum Werkzeug bilden kann.

3. Vorrichtung nach Anspruch 1 oder 2, **dadurch gekennzeichnet, dass,** wenn der rohrförmige Kolben (20) in der ausgefahrenen Stellung ist und die hydraulischen Verbinder (23, 10) des rohrförmigen Kolbens (20) und des Werkzeugs (2) verbunden sind, die stromabwärts liegende Querseite (70) der rohrförmigen Stange(n) (25, 25a, 25b) einen aktiven Querschnitt bildet, auf den der Druck der Hydraulikleitung (6) des Geräts ausgeübt wird, wobei die stromabwärts liegende Querseite (70) es so durch Reaktion ermöglicht, die Haltekraft in der verbundenen Stellung einzustellen, die auf den hydraulischen Verbinder (23) des Geräts ausgeübt wird, und dies proportional zum Druck in der Hydraulikleitung (6) und in Echtzeit.

4. Vorrichtung nach einem der Ansprüche 1 bis 3, **dadurch gekennzeichnet, dass** sie erste Blockiereinrichtungen enthält, die den rohrförmigen Kolben (20) in der eingefahrenen Stellung blockieren können.

5. Vorrichtung nach einem der Ansprüche 1 bis 4, **dadurch gekennzeichnet, dass** sie zweite Blockiereinrichtungen enthält, die den rohrförmigen Kolben (20) in der ausgefahrenen Stellung blockieren können.

6. Vorrichtung nach Anspruch 4 oder 5, **dadurch gekennzeichnet, dass** die ersten und/oder die zweiten Blockiereinrichtungen Folgendes enthalten:
- ein stromabwärts liegendes vorgesteuertes Ventil (36), das auf einer stromabwärts liegenden Leitung (34) angeordnet ist, die für die Verbindung der stromabwärts liegenden Kammer (29) mit dem hydraulischen Steuerblock (30) bestimmt ist;
- ein stromaufwärts liegendes vorgesteuertes Ventil (35), das auf einer stromaufwärts liegenden Leitung (33) angeordnet ist, die für die Verbindung der stromaufwärts liegenden Kammer (28) mit dem hydraulischen Steuerblock (30) bestimmt ist;
wobei das stromabwärts liegende Ventil (36) dazu bestimmt ist, dass sein Öffnen durch das Vorhandensein von unter Druck stehendem Öl in der stromaufwärts liegenden Leitung ( 33) und s ein Schließen durch den Druckabfall in der stromaufwärts liegenden Leitung (33) gesteuert wird;
wobei das stromaufwärts liegende Ventil (35) dazu bestimmt ist, dass sein Öffnen durch das Vorhandensein von unter Druck stehendem Öl in der stromabwärts liege nden Leitung (34) und sein Schließen durch den Druckabfall in der stromabwärts liegenden Leitung (34) gesteuert wird.

7. Vorrichtung nach einem der Ansprüche 1 bis 6,
**dadurch gekennzeichnet, dass** sie eine in die Öffnung (27) der rohrförmigen Stange (25, 25a, 25b) mündende Druckentlastungsleitung (31) enthält, die mit einem vorgesteuerten Ventil (32) versehen und dazu bestimmt ist, mit dem hydraulischen Steuerblock (30) verbunden zu werden, wobei die Druckentlastungsleitung (31) es ermöglicht, den Druck in der Hydraulikleitung (6) des Geräts zu senken, ehe das Trennen der hydraulischen Verbinder (23, 10) vom rohrförmigen Kolben (20) und vom Werkzeug (2) gesteuert wird.

8. Vorrichtung nach einem der Ansprüche 1 bis 7,
**dadurch gekennzeichnet, dass** sie ein P ositions-Kontaktelement (41) enthält, das, da es dazu bestimmt ist, mit dem hydraulischen Steuerblock (30) verbunden zu werden, die korrekte Positionierung der Vorrichtung (4) bezüglich des Verbinders des Werkzeugs (2) erfassen kann, um die hydraulische Verbindung zu erlauben.

9. Vorrichtung nach einem der Ansprüche 1 bis 8,
**dadurch gekennzeichnet, dass** sie Einrichtungen zur Erfassung (55) der Rückkehr des rohrförmigen Kolbens (20) in die eingefahrene Stellung enthält,
wobei die Erfassungseinrichtungen (5 5) dazu bestimmt sind, mit Steuereinrichtungen (71) der mechanischen Entriegelung zwischen dem Werkzeug (2) und dem Gerät verbunden zu werden.

10. Vorrichtung nach einem der Ansprüche 1 bis 9,
**dadurch gekennzeichnet, dass** der im rohrförmigen Kolben (20) angeordnete Verbinder (23) eine Hülle (42) enthält, in die ein gleitendes Bauteil (46) montiert ist, das in der Ruhestellung das stromabwärts liegende Ende der Hülle (42) verschließt, und das, wenn der rohrförmige Kolben (20) in seine ausgefahrene Stellung verschoben wird, unter der Wirkung des Verbinders (10) des Werkzeugs (2) in Längsrichtung stromaufwärts in eine eingedrückte Stellung verschoben werden kann, in der das Bauteil (46) den Durchgang von Öl zum Werkzeug (2) ermöglicht.

11. Vorrichtung nach einem der Ansprüche 1 bis 10,
**dadurch gekennzeichnet, dass** sie mindestens eine elastisch verformbare rohrförmige Ummantelung wie einen Faltenbalg (56) enthält, die um mindestens einen rohrförmigen Kolben (20) herum angeordnet ist, wobei das stromaufwärts 1 iegende Ende (57) der Ummantelung am stromabwärts liegenden Ende (15) des Körpers (12) befestigt ist und das stromabwärts liegende Ende der Ummantelung am stromabwärts liegenden Ende des rohrförmigen Kolbens (20) befestigt ist und eine Dichtlippe (58) aufweist.

12. Vorrichtung nach einem der Ansprüche 1 bis 11,
**dadurch gekennzeichnet, dass** sie mindestens ein Loch (60) enthält, das einerseits in eine Leitung (31), die mit einem vorgesteuerten Ventil (32) versehen und mit der Längsöffnung (27) der rohrförmigen Stange (25) verbunden ist, und andererseits auf eine äußere Seitenfläche (16) des Körpers (12) mündet, um den Durchgang von Öl zwischen den Kanälen (22) der rohrförmigen Kolben (20) von zwei einander benachbarten Vorrichtungen (4) zu ermöglichen.

13. Vorrichtung nach einem der Ansprüche 1 bis 12,
**dadurch gekennzeichnet, dass** der Körper (12) mindestens eine Rille (61) enthält, die auf einer seiner Seitenflächen (16) hergestellt ist und in der eine Tragplatte (62) befestigt werden kann, die für die Mont age der Vorrichtung (4) auf das Gerät oder von zwei einander benachbarten Vorrichtungen (4) bestimmt ist.

14. Hydraulische Verbindungseinheit, **dadurch gekennzeichnet, dass** sie mindestens eine Vorrichtung (4) nach einem der Ansprüche 1 bis 13 und mindestens ein Verbindungsmodul (7) enthält, das dazu bestimmt ist, auf das Werkzeug (2) montiert zu werden und mindestens einen ersten hydraulischen Verbinder (10, 10a) enthält, der mit dem ersten hydraulischen Verbinder (23, 23a) der Vorrichtung (4) zusammenwirken kann.

15. Einheit nach Anspruch 14, **dadurch gekennzeichnet, dass** der hydraulische Verbinder (10) des Werkzeugs (2) eine zylindrische Hülle (49) enthält, deren Außenseite dazu bestimmt ist, mit der Wand des Kanals (22) des rohrförmigen Kolbens (20) zusammenzuwirken.

16. Einheit nach Anspruch 15, **dadurch gekennzeichnet, dass** der stromabwärts liegende Endbereich des Kanals (22) des rohrförmigen Kolbens (20) ausgeweitet ist, wobei die Innenseite des rohrförmigen Kolbens (20) so eine Führungswand für den Eintritt des hydraulischen Verbinders (10) des Werkzeugs (2) in den Kanal (22) bildet.

17. Einheit nach einem der Ansprüche 14 bis 16,
**dadurch gekennzeichnet, dass** sie außerdem einen hydraulischen Steuerblock (30) enthält, der mit einem Positions -Kontaktelement (41) zwischen der Vorrichtung (4) und dem Werkzeug (2) verbunden ist und Folgendes aufweist:
- eine Versorgungsleitung (38) mit unter Druck stehendem Öl und eine Austrittsleitung (40) zu einem Behälter (37);
- erste, zweite und dritte Leitungen ( 31, 33, 34), die je mit einem ersten, zweiten bzw. dritten vorgesteuerten Ventil (32, 35, 36) versehen sind, die den hydraulischen Steuerblock (30) mit dem Kanal (22) des rohrförmigen Kolbens (20), mit der stromaufwärts liegenden Kammer (28) bzw. mit der stromabwärts liegenden Kammer (29) verbinden.
